(19) Europäisches Patentamt
European Patent Office
Office européen des brevets

(11) **EP 3 896 433 A1**

(12) **EUROPEAN PATENT APPLICATION**

(43) Date of publication:
**20.10.2021 Bulletin 2021/42**

(51) Int Cl.:
***G01N 21/64*** *(2006.01)*

(21) Application number: **21164169.1**

(22) Date of filing: **23.03.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.04.2020 IT 202000007807**

(71) Applicant: **Flim Labs S.r.l.**
**00135 Roma (RM) (IT)**

(72) Inventor: **ROSSETTA, Alessandro**
**00135 ROMA (IT)**

(74) Representative: **Cataldi, Silvia et al**
**Barzanò & Zanardo Roma S.p.a.**
**Via Piemonte, 26**
**00187 Roma (IT)**

(54) **METHOD FOR THE FAST CALCULATION OF THE DECAY LIFE TIME OF A FLUORESCENCE SIGNAL AND SYSTEM IMPLEMENTING THE METHOD**

(57) The present invention relates to a method for the fast calculation of the decay of the lifetime of a fluorescence signal, comprising the following steps:
*a*. providing a fluorescent sample to analyze and, starting from the photons emitted as a result of excitation by an external pulsed laser source, building a histogram of the decay lifetime of the fluorescence signal associated to said fluorescent sample;
*b*. calculating a first g and a second s phasor;
*c*. calculating the phase and modulation of said fluorescence signal, starting from said first g and second s phasor, in vector form;
*d*. calculating the lifetime of said fluorescence signal starting from said phase and modulation, calculated in said step c.; and
*e*. displaying the values of said first g and second s phasor.

The present invention also relates to a system (S) of implementing the method.

Fig. 1

EP 3 896 433 A1

**Description**

The present invention relates to a method for the fast calculation of the lifetime decay of a fluorescence signal, in particular for the analysis of the fluorescence lifetime histogram.

The present invention also relates to a system that implements the method.

More in detail, the invention relates to a method of the above type, studied and implemented in particular for the calculation of the phasors of the histogram of the decay time of a fluorescence signal, but which can be used for the analysis of any signal of which the calculation of phasors is necessary.

In the following, the description will be addressed to the analysis of the decay time of a fluorescence signal, but it is clear that it should not be considered limited to this specific use.

As is well known, the Fluorescence Lifetime Imaging Microscopy or FLIM technique is a technique for producing an image based on the differences in the exponential decay times of the fluorescence of a fluorescent sample. The duration of the fluorescence signal emitted by a fluorophore, rather than its intensity, is used to create the image in FLIM.

In particular, a fluorophore that is excited by a photon will fall into the ground state with a certain probability based on the decay rates through a series of different decay paths.

The use of phasor transformation of the fluorescence decay time histograms simplifies the interpretation of the results obtained by the FLIM technique.

Currently, it is known the calculation of phasors starting from the discrete histogram of the decay time of the fluorescence signal, carried out through the use of summations.

It is evident that this procedure is expensive in terms of computational cost for a computer and in terms of memory occupation of the system that implements it.

In fact, the use of summations necessarily requires the use and implementation, at the computational level, of the so-called " for" loops.

Specifically, if it is intended to analyze all the harmonic contribution of a fluorescence decay signal, it is necessary to implement nested "for" loops, which involve an increase in the computational burden.

In the light of the above, it is, therefore, an object of the present invention to use a method for calculating the phasors of the fluorescence decay histogram which is less complex at the computational level, since it reduces the phasor calculation times.

A further object of the present invention is to provide a method which allows reducing the viewing and analysis times of the fluorescence half-life or decay times.

Finally, the object of the present invention is to provide an optimized system for implementing the method.

It is, therefore, object of the present invention a method for the fast calculation of the decay lifetime of a fluorescence signal comprising the following steps:

a. providing a fluorescent sample to analyze and, starting from the photons emitted as a result of excitation by an external pulsed laser source, building a histogram of the decay life time of the fluorescence signal associated to said fluorescent sample;

b. calculating a first g and a second s phasor;

c. calculating the phase and modulation of said fluorescence signal, starting from said first g and second s phasor, in vector form;

d. calculating the lifetime of said fluorescence signal starting from said phase and modulation, calculated in said step c.; and

e. displaying the values of said first g and second s phasor.

Further according to the invention, said steps b., c., and d. are performed for all the harmonic contributions of the fluorescence signal, higher than the first contribution.

Still according to the invention, said step a. comprises the following sub-steps:

a.1. given a first $counter\_\varphi$ and a second $counter\_w$ counter, stored in a memory register of an external acquisition system, detected the presence of an incoming photon in a certain channel of the external acquisition system, extrapolating from said memory register for each photon arrived, the values of said first $counter\_\varphi$ and second $counter\_w$ counter and associating, by a known method, the values of these counters to the incoming photon and sending said parameters to the memory of the system object of the present invention;

a.2. calculating the actual incoming time bin of the photon using the formula

$$\varphi_{tot} = \left(counter\_\varphi + \frac{n \cdot counter\_w}{m}\right) MOD\ m$$

where $m$ is a predefined number of time bins in which is intended to divide the histogram and $MOD\,m$ is a mathematical operation that returns the remainder of the integer division with respect to $m$;

a.3. calculating the total number of photons detected;

a.4. using said first $counter\_\varphi$ and second $counter\_w$ counters and the time bin of each detected photon by the preceding sub-steps a.1., a.2., a.3., for populating a histogram having on the abscissa axis $m$ bin and on the ordinate axis the number of detected photons for each bin value also returning, as output, the histogram of the decay lifetime of the fluorescence signal $histogram_{Ch_{(k)}}$ and the number of detected photons for the entire histogram $N_{Ch_k}$.

Always according to the invention, said step b. comprises the following sub-steps:

b.1. applying the discrete Fourier transform to the histogram of the decay life time of the fluorescence signal for each harmonic frequency h using the following formula:

$$ fft_{(h)} = \left( histogram_{Ch_{(k)}} \right) $$

wherein $histogram_{Ch_{(k)}}$ is the histogram of the decay time life of the fluorescence signal, obtained in said step a.4.;

b.2. calculating said second phasor s, for each harmonic frequency h, as an imaginary part of the discrete and normalized Fourier transform for the total number of detected photons, according to the following formula

$$ s_{(h)} = \frac{imag\left(fft_{(h)}\right)}{N_{Ch_k}} $$

wherein $fft_{(h)}$ is the mathematical operator of the fast and discrete Fourier transform, $imag$ is the mathematical operator that extrapolates the imaginary part of a complex number, $N_{Ch_k}$ is the total number of detected photons for a given channel inside of a time interval;

b.3. calculating said first phasor g, for each harmonic frequency h, as a real part of the discrete and normalized Fourier transform for the total number of detected photons, according to the following formula:

$$ g_{(h)} = \frac{real\left(fft_{(h)}\right)}{N_{Ch_k}} $$

wherein $fft_{(h)}$ is the mathematical operator of the fast and discrete Fourier transform, $real$ is the mathematical operator that extrapolates the real part of a complex number, $N_{Ch_k}$ is the total number of detected photons for a given channel inside of a time interval;

b.4. returning as output said first phasor s in vector form and said second phasor $g$ in vector form having dimensions 1 X h.

Preferably according to the invention, said step c. comprises the following sub-steps:

c.1. calculating the phase in radians for each harmonic contribution h, according to the following formula:

$$ \varphi\_rad_{(h)} = atan2\left(s_{(h)}, g_{(h)}\right) $$

c.2. calculating the phase in degrees for each harmonic contribution h, according to the following formula:

$$ \varphi\_deg_{(h)} = atan2\left(s_{(h)}, g_{(h)}\right) \cdot \frac{180}{\pi} $$

c.3. calculating the modulation for each harmonic contribution h, according to the following formula:

$$m_{(h)} = \sqrt{\left(s_{(h)}\right)^2 + \left(g_{(h)}\right)^2}$$

c.4. calculating the modulation for each harmonic contribution h, normalized by the modulation value for h = 0, according to the following formula:

$$m\_norm_{(h)} = \frac{m_{(h)}}{m_{(h=0)}}$$

Further according to the invention, said step d. comprises the following sub-steps:

d.1. calculating, for each harmonic contribution, the lifetime of the fluorescence signal in the phase, starting from the phase expressed in radians, calculated in said step c.1., according to the following formula:

$$\tau_{\varphi(h)} = \frac{tan\left(\varphi\_rad_{(h)}\right)}{2\pi h f_{ex}};$$

where $f_{ex}$ is the value of the fundamental frequency of the emission source of the fluorescent sample;
d.2. calculating, for each harmonic contribution, the life time of the fluorescence signal in the modulation, starting from the normalized modulation for the harmonic contribution for h = 0, calculated in said step c.4., according to the following formula:

$$\tau_{m(h)} = \frac{1}{2\pi h f_{ex}} \sqrt{\left(\frac{1}{m\_norm_{(h)}}\right)^2 - 1}$$

d.3. returning as output the values of the decay times calculated by phase and modulation for each harmonic contribution of the histogram of the fluorescence signal.

Still according to the invention, said step e. comprises the following sub-steps:

e.1. representing, on a number h of Cartesian planes having on the abscissa axis said first phasor g and on the ordinate axis said second phasor s, the semicircle described by the following equation:

$$\left(g - \frac{1}{2}\right)^2 + s^2 = \left(\frac{1}{2}\right)^2$$

e.2. representing on the h-th Cartesian plane the couples of h-th values of said first phasor g and of said second phasor s;
e.3. providing in output the values s, g, m, Φ, $t_\Phi$, $t_m$ as a function of h for each point F represented on the Cartesian plane and defined by a couple of coordinates (g, s).

It is further object of the present invention a computer program, comprising coding means such that, when running on a computer, they perform the steps of the method described above.
It is further object of the present invention a system configured to implement the method for the fast calculation of the decay life time of a fluorescence signal, which can be coupled to an external acquisition system, of the type comprising a source pulsed laser configured to excite a fluorescent sample so that it can emit a flux of photons, said system comprising: a plurality of data lines, connectable to said external acquisition system; a memory unit capable of storing the input data on said plurality of data lines; a logic control unit, operatively connected to said memory unit, capable of performing out the steps a. - d. said method, starting from the data stored in said memory unit; and a display unit, operatively connected to said logic control unit, capable of receiving the data calculated by said logic control unit and of displaying said first g and second phasor s, calculated in said step e. of said method.

Still according to the invention, the computer program is installed in said logic control unit.

The present invention will be now described, for illustrative but not limitative purposes, according to its preferred embodiments, with particular reference to the figures of the enclosed drawings, wherein:

figure 1 illustrates a block diagram of a first step of the method for the fast calculation of the fluorescence life time, object of the present invention;

figure 2 illustrates a block diagram of a second step of the method object of the present invention;

figure 3 illustrates a block diagram of a third step of the method object of the present invention;

figure 4 illustrates a block diagram of a fourth step of the method object of the present invention;

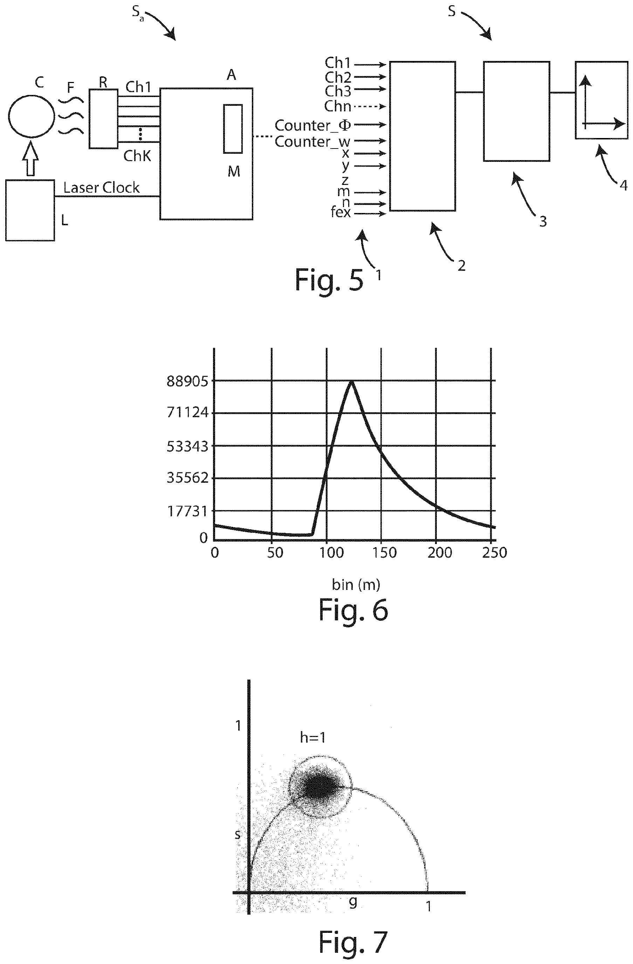

figure 5 illustrates a schematic view of the system which implements the method for the fast calculation of the decay of the lifetime of a fluorescence signal, object of the present invention;

figure 6 illustrates a schematic view of a reconstruction of the histogram of the decay of the lifetime of a fluorescence signal, obtained by means of step a.4 of the method object of the present invention; and

figure 7 illustrates a visualization associated with the histogram reconstructed in figure 6.

In the various figures, similar parts will be indicated with the same numerical references.

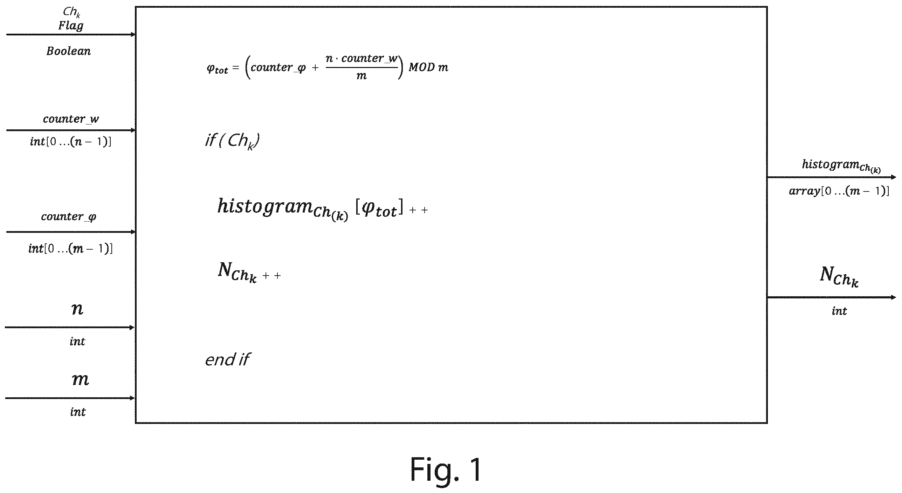

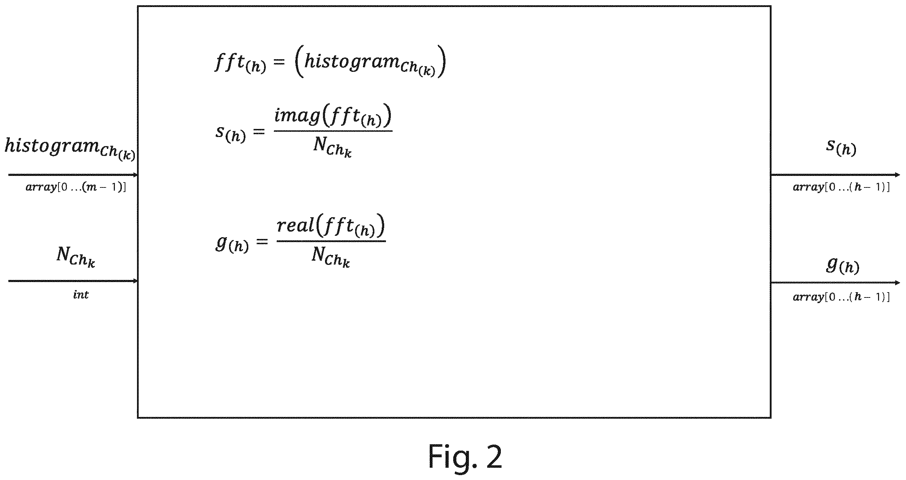

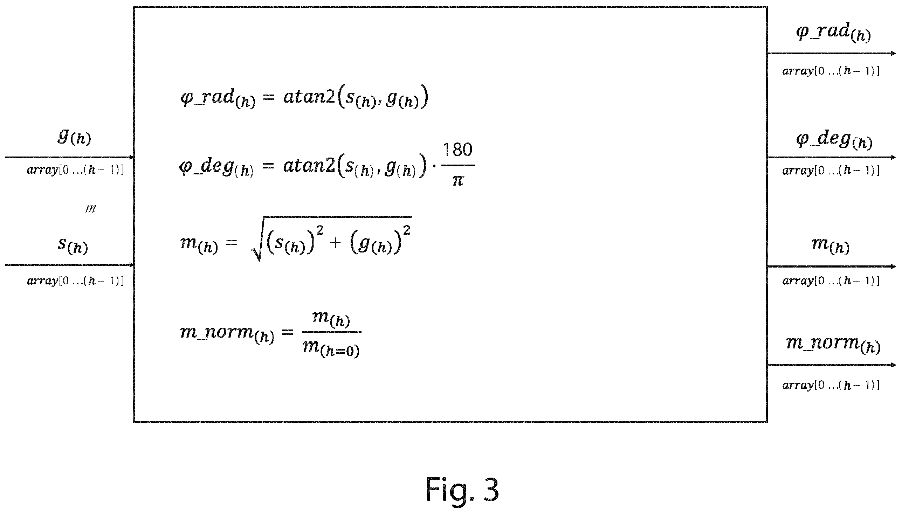

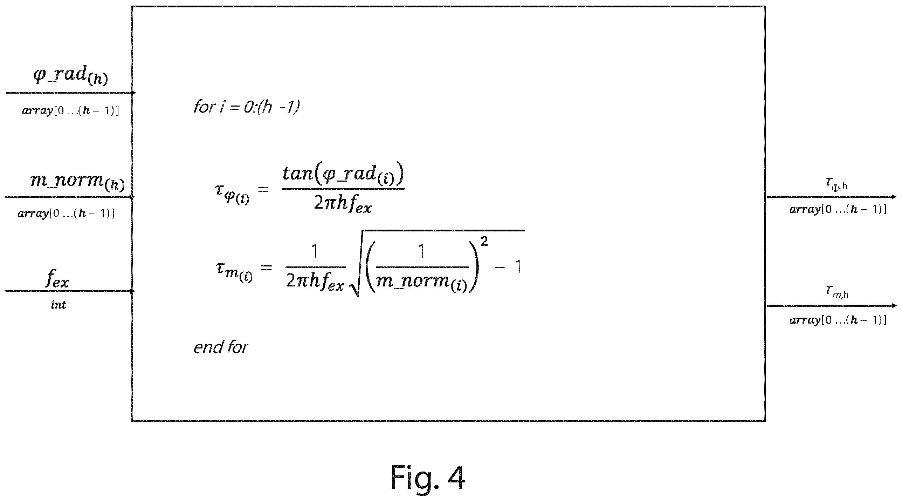

With reference to figures 1-4, the method for the fast calculation of the fluorescence lifetime, object of the present invention, comprises a series of consecutive steps.

In particular, the steps are essentially the following:

a. starting from the photons associated with a fluorescent sample to be analyzed, emitted due to the excitation by an external pulsed laser source, constructing the histogram of the decay of the lifetime of the fluorescence signal of said fluorescent sample;

a.1. given a first *counter_φ* and a second *counter_w* counter, stored in a memory register of an external acquisition system, detected the presence of an incoming photon in a determined channel of the external acquisition system, extrapolate from said memory register for each arrived photon, the values of said first *counter_φ* and a second *counter_w* counters and associate, by a known methodology, the values of these counters to the incoming photon, and send said parameters to the memory of the system object of the present invention;

a.2. calculate the actual *bin* time of arrival of the photon using the following formula 1), as will be described in detail below;

a.3. calculate the total number of photons detected;

a.4. use said first *counter_φ* and said second *counter_w* counters and the *bin* time of each photon detected by the previous sub-steps a.1., a.2., a.3., to populate a histogram having on the abscissa axis *m bin* and on the ordinate axis the number of photons recorded for each value of *bin,* also returning, as output, the histogram of the decay of the life time of the fluorescence signal and the number of photons detected for the entire histogram.

A step b. follows:

b. calculation of a first phasor *g* and a second phasor *s* for all the harmonic contributions of the fluorescence signal, in particular for all the harmonic contributions higher than the first contribution;

b.1. apply the discrete Fourier transform to the lifetime decay histogram of the fluorescence signal for each harmonic frequency *h;*

b.2 calculate the first phasor *g,* for each harmonic frequency *h,* as a real part of the discrete and normalized Fourier transform for the total number of photons detected within the histogram to be calculated;

b.3. calculate the second phasor *s,* for each harmonic frequency *h,* as an imaginary part of the discrete and normalized Fourier transform for the total number of photons detected within the histogram to be calculated;

b.4. return as output the vectors s and g having dimensions $1 \times h$.

A step *c.* follows:

c. calculate the phase and the modulation of the fluorescence signal for each harmonic contribution, starting from the first s and second g phasor in vector form;

c.1. calculate the phase in radians for each harmonic contribution h;

c.2. calculate the phase in degrees for each harmonic contribution h;

c.3. calculate the modulation for each harmonic contribution h;

c.4. calculate the modulation for each harmonic contribution h, normalized by the modulation value for h = 0.

A *d.* step follows:

d. calculate the decay times, i.e., the lifetime of the fluorescence signal starting from the phase and modulation, for each harmonic contribution;

d.1. calculate, for each harmonic contribution, the lifetime of the fluorescence signal in the phase, starting from the phase expressed in radians;

d.2. calculate, for each harmonic contribution, the lifetime of the fluorescence signal in the modulation, starting from the normalized modulation for the harmonic contribution for $h = 0$;

d.3. return as output the values of the decay times calculated by phase and modulation for each harmonic contribution of the histogram of the fluorescence signal.

A step *e.* follows:

e. displaying the values of said first and second phasors;

e.1. represent, on a number h of Cartesian planes, corresponding to the number of the harmonics, having as the abscissa axis g, and as the ordinate axis s, the semicircle described by the following equation 10);

e.2 represent on the h-th Cartesian plane the pairs of h-th values of g and s;

e.3. output the values of s, g, m (to be intended as modulation and not *bin* number), $\Phi$, $t_\Phi$, $t_m$ as a function of h for each point F represented on the Cartesian plane and identified by a pair of coordinates (g, s).

The steps and sub-steps of the method described above are now disclosed in more detail.

In particular, in step a., using a known real-time fluorescence acquisition system, provided with a plurality of external data acquisition channels, operating and functioning in the frequency domain, starting from the raw data coming from said acquisition system, the histogram of the fluorescence signal lifetime decay is created, for each available data channel.

In particular, by raw data, it is meant the photons associated with a fluorescent sample emitted following the excitation of the fluorescent sample to be analyzed by an external pulsed laser source.

As is already in use in known algorithms, each detected photon is assigned a true or false Boolean type value, associated with two counters, one indicating the phase, indicated with *counter_φ* and one indicating the time window, indicated with *counter_w,* in which the incoming photon was detected.

The counters *counter_φ* and *counter_w* are detected and stored in a memory of the S system.

In particular, *counter_φ* distinguishes the value of a binary counter stored in the memory of the system S, which increases at a speed equal to the clock of the laser, which excites the fluorescent sample.

*counter_φ* is an integer that is predefined and chosen in an interval from 0 to m-1, usually as the power of 2, where m is a natural integer that represents the number of temporal *bins,* i.e., the subset of points on the abscissa axis of the histogram, in which we want to divide the histogram of the decay of the lifetime of the fluorescence signal.

The choice of the value of *counter_φ* depends on two factors: on the number of bins in the decay histogram and on the value of the cross-correlation frequency generated by the known principle of digital heterodyne in the external acquisition system: the larger m, the greater the period of the cross-correlation and the lower the cross-correlation frequency, the greater the number of points on the abscissa axis, with which the histogram of the fluorescence decay is represented.

*counter_w* is the value of a binary counter in the acquisition system that increases at a speed equal to the laser clock multiplied by the cross-correlation factor $\left\lceil \dfrac{(m-1)}{m} \right\rceil$ and by the number of harmonics or windows to be sampled for the fluorescence signal.

*counter_w* is an integer that goes from 0 to n-1, where n is a natural integer and is the number of harmonics that are desired to be sampled to then reconstruct the fluorescence signal and the number of harmonics that are desired to be used to then calculate the decay of the lifetime of the fluorescence signal.

The reconstruction can take place in an absolute way, i.e., it is possible to reconstruct the decay histogram for a specific fluorescence channel, regardless of the presence of a scanning system that explores the fluorescent sample in x, y, and z, as described in detail below.

Or, if there is a scanning system that explores the fluorescent sample in a two-dimensional and three-dimensional way, the reconstruction can be carried out for each pixel, if synchronization signals coming from a scanning system are available.

In particular, when the reconstruction of the decay of the lifetime of the fluorescence signal is carried out pixel by pixel or voxel by voxel, if the fluorescent sample is explored by means of a system capable of scanning the sample in 2D or 3D way, such scanning system provides for the synchronization signals such as: pixels clock, line clock, frame clock, so as to know which pixels or voxels are gradually scanned.

These synchronization signals are sampled over time, so that it is then possible to associate/map/group the photons within a pixel/voxel and consequently also reconstruct for that pixel/voxel the histogram of the decay of the lifetime of the fluorescence signal, according to a known technique.

If a photon is detected on the k-th data channel of the external acquisition system, the Boolean type field $Ch_k$ is set to true.

The total phase or actual bin of arrival of the fluorescence photon is calculated using the following formula 1):

$$\varphi_{tot} = \left( counter\_\varphi + \frac{n \cdot counter\_w}{m} \right) MOD\, m$$

where the values appearing in the formula have been described above, while *MOD m* is a mathematical operation that returns the remainder of the integer division with respect to m.

After calculating the value $\varphi_{tot}$, it is stored in the form of a histogram, in which the number of events is reported on the ordinate, i.e., the number of photons detected for each time bin, and the total arrival phase of the photons is reported in the abscissa.

The expression stored in the form of a histogram means that each value of the final destination *bin* of each photon is used to populate a histogram having the number of bins on the abscissa (bin, from 0 to (m-1)) and on the ordinate the number of photons that have been detected by the acquisition system for each bin.

In phase b. the calculation of said first and second phasors takes place.

To this end, it must be specified that the fluorescence signal is generated starting from the fundamental repetition frequency of the laser pulses, therefore the Fundamental Frequency is equal to the Laser Frequency.

In periodic phenomena, the harmonic frequencies are the frequencies contained within the signal, whose value is an integer multiple of the base frequency, that is, of the Fundamental Frequency. Harmonic Frequencies are also called Harmonic Content.

It is defined h as a natural integer that distinguishes the harmonic frequency, multiple of the fundamental frequency, enclosed inside of the fluorescence signal.

Within the fluorescence signal, it is possible to analyze or extract the contributions of the fluorescence signal due to harmonic frequencies.

In particular, starting from the histogram created in the previous phase a. and using the total number of events contained in it, the phasor components $g_{(h)}$ and $s_{(h)}$ as a function of the harmonic contribution h are calculated using the discrete Fourier transform.

In particular, g and s are computed as real and imaginary part of the Fourier transform, for each harmonic component available in the input signal, according to the following formulas:

$$s_{(h)} = \frac{imag(fft_{(h)})}{N_{Ch_k}} \quad 2)$$

$$g_{(h)} = \frac{real(fft_{(h)})}{N_{Ch_k}} \quad 3)$$

where: $fft_{(h)}$ is the mathematical operator of the fast and discrete Fourier transform, which returns a vector of complex numbers for each harmonic frequency of the starting signal, which in this case is the fluorescence decay histogram; *imag* is the mathematical operator that extracts the imaginary part of a complex number, $C = x + iy$, $imag(C) = y$; *real* is the mathematical operator that extracts the real part of a complex number $C = x + iy$, $real(C) = x$; $N_{Ch_k}$ is the total number of photons detected for a given channel within the time interval in which the calculation of $s_{(h)}$ e $g_{(h)}$ is carried out.

In phase c. the phase and modulation of the fluorescence signal are calculated.

In particular, using said first g and second s phasor obtained in the previous step b., using a known technique of analyzing the fluorescence signals in the frequency domain, the following values are calculated using the following formulas:

$$\varphi\_rad_{(h)} = atan2\left(s_{(h)}, g_{(h)}\right) \quad 4)$$

$$\varphi\_deg_{(h)} = atan2\big(s_{(h)}, g_{(h)}\big) \cdot \frac{180}{\pi} \qquad 5)$$

$$m_{(h)} = \sqrt{\big(s_{(h)}\big)^2 + \big(g_{(h)}\big)^2} \qquad 6)$$

$$m\_norm_{(h)} = \frac{m_{(h)}}{m_{(h=0)}} \qquad 7)$$

where: *atan2* is a two-argument variation of the arctangent function; $\varphi\_rad_{(h)}$ is the phase calculated in radians; $\varphi\_deg_{(h)}$ is the phase calculated in degrees, it is the term or factor of proportionality between degrees and radians; $m_{(h)}$ is the modulation expressed as a vector of h elements; $m\_norm_{(h)}$ is the normalization of $m_{(h)}$.

In step d. the decay times of the fluorescence per phase and modulation are calculated, i.e., the values of the lifetime of the fluorescence signal.

In particular,

$$\tau_{\varphi(h)} = \frac{tan\big(\varphi\_rad_{(h)}\big)}{2\pi h f_{ex}} \qquad 8)$$

$$\tau_{m(h)} = \frac{1}{2\pi h f_{ex}} \sqrt{\left(\frac{1}{m\_norm_{(h)}}\right)^2 - 1} \qquad 9)$$

where: $\tau_{\varphi(h)}$ is the lifetime of the fluorescence signal calculated starting from the phase of the signal; $\tau_{m(h)}$ is the lifetime of the fluorescence signal calculated starting from the modulation of the signal; $f_{ex}$ is the value of the fundamental frequency, i.e., the laser frequency expressed in Hz.

In step e. the values of said first g and second s phasor, obtained in step c, are displayed, on a graph, in which the first phasor g is shown on the abscissa and the second phasor s on the ordinate, so that these values are displayed in reference to a semicircle according to the following equation:

$$\left(g - \frac{1}{2}\right)^2 + s^2 = \left(\frac{1}{2}\right)^2 \qquad 10)$$

The S system that implements the method is preliminarily coupled to an external known acquisition system $S_A$.

Said external known acquisition system $S_A$ comprises a pulsed laser source L, which excites a fluorescent sample C to be analyzed, according to a clock frequency.

The flux F of photons emitted by the fluorescent sample is detected by the sensors R, which send the information through a plurality of fluorescence data channels $C_{h1}$, $C_{h2}$, ..., $C_{hh}$, ..., $C_{hk}$ to an acquisition system A based on known technique in the frequency domain.

Said acquisition system A comprises a memory unit M or memory register, in which the information on said plurality of fluorescence data channels $C_{h1}$, $C_{h2}$, ..., $C_{hh}$, ..., $C_{hk}$ and the values of said first *counter_φ* and second *counter_w* counter, are stored.

Said system S, which implements the method object of the present invention, essentially comprises a plurality of data lines 1, a memory unit 2, a logic control unit 3, and a display unit 4.

On said plurality of data lines 1 the information and data coming from said known external acquisition system $S_A$ converge, such as fluorescence data $C_{h1}$, $C_{h2}$, ..., $C_{hh}$, ..., $C_{hk}$, the values of said first *counter_φ* and second *counter_w* counter, the value of the fundamental frequency $f_{ex}$, the values m and *n,* and the spatial coordinates x, y, and z according to which the fluorescent sample is scanned from the external system $S_A$.

In said memory unit 2 the input data are stored by means of said plurality of data lines 1.

In said logic control unit 3 the calculation and execution of said steps a.- d. of the method described above takes place.

Said display unit 4 receives the calculated data from said logic control unit 3 and allows the display of the values of said first g and second s phasor, calculated according to step e. of the method described above.

As is apparent from the above description, the method object of the present invention allows a reduction in the phasors calculation times, as a function of the harmonic contribution, of about $2 \cdot 10^3$.

The present invention has been described for illustrative but not limitative purposes, according to its preferred embodiments, but it is to be understood that modifications and/or changes can be introduced by those skilled in the art without departing from the relevant scope as defined in the enclosed claims.

**Claims**

1. Method for the fast calculation of the decay lifetime of a fluorescence signal comprising the following steps:

   a. providing a fluorescent sample to analyze and, starting from the photons emitted as a result of excitation by an external pulsed laser source, building a histogram of the decay life time of the fluorescence signal associated to said fluorescent sample;
   b. calculating a first g and a second s phasor;
   c. calculating the phase and modulation of said fluorescence signal, starting from said first g and second s phasor, in vector form;
   d. calculating the lifetime of said fluorescence signal starting from said phase and modulation, calculated in said step c.; and
   e. displaying the values of said first g and second s phasor.

2. Method according to the preceding claim, **characterized in that** said steps b., c. and d. are performed for all the harmonic contributions of the fluorescence signal, higher than the first contribution.

3. Method according to any one of the preceding claims, **characterized in that** said step a. comprises the following sub-steps:

   a.1. given a first $counter\_\varphi$ and a second $counter\_w$ counter, stored in a memory register of an external acquisition system, detected the presence of an incoming photon in a certain channel of the external acquisition system, extrapolating from said memory register for each photon arrived, the values of said first $counter\_\varphi$ and second $counter\_w$ counter and associating, by known method, the values of these counters to the incoming photon and sending said parameters to the memory of the system object of the present invention;
   a.2. calculating the actual incoming time bin of the photon using the formula

   $$\varphi_{tot} = \left( counter\_\varphi + \frac{n \cdot counter\_w}{m} \right) MOD\ m$$

   where m is a predefined number of time bins in which is intended to divide the histogram and MOD m is a mathematical operation that returns the remainder of the integer division with respect to m;
   a.3. calculating the total number of photons detected;
   a.4. using said first $counter\_\varphi$ and second $counter\_w$ counters and the time bin of each detected photon by the preceding sub-steps a.1., a.2., a.3., for populating a histogram having on the abscissa axis m bin and on the ordinate axis the number of detected photons for each bin value also returning, as output, the histogram of the decay lifetime of the fluorescence signal $histogram_{Ch_{(k)}}$ and the number of detected photons for the entire histogram $N_{Ch_k}$.

4. Method according to the preceding claim, **characterized in that** said step b. comprises the following sub-steps:

   b. 1. applying the discrete Fourier transform to the histogram of the decay lifetime of the fluorescence signal for each harmonic frequency h using the following formula:

   $$fft_{(h)} = \left( histogram_{Ch_{(k)}} \right)$$

   wherein $histogram_{Ch_{(k)}}$ is the histogram of the decay time life of the fluorescence signal, obtained in said step a.4.;

*b.2.* calculating said second phasor *s,* for each harmonic frequency h, as an imaginary part of the discrete and normalized Fourier transform for the total number of detected photons, according to the following formula

$$s_{(h)} = \frac{imag\big(fft_{(h)}\big)}{N_{Ch_k}}$$

wherein *fft*$_{(h)}$ is the mathematical operator of the fast and discrete Fourier transform, *imag* is the mathematical operator that extrapolates the imaginary part of a complex number, $N_{Ch_k}$ is the total number of detected photons for a given channel inside of a time interval;

*b.3.* calculating said first phasor *g,* for each harmonic frequency h, as a real part of the discrete and normalized Fourier transform for the total number of detected photons, according to the following formula:

$$g_{(h)} = \frac{real\big(fft_{(h)}\big)}{N_{Ch_k}}$$

wherein *fft*$_{(h)}$ is the mathematical operator of the fast and discrete Fourier transform, *real* is the mathematical operator that extrapolates the real part of a complex number, $N_{Ch_k}$ is the total number of detected photons for a given channel inside of a time interval;

*b.4.* returning as output said first phasor *s* in vector form and said second phasor g in vector form having dimensions 1 X h.

**5.** Method according to the preceding claim, **characterized in that** said step *c.* comprises the following sub-steps:

*c.1.* calculating the phase in radians for each harmonic contribution h, according to the following formula:

$$\varphi\_rad_{(h)} = atan2\big(s_{(h)}, g_{(h)}\big)$$

*c.2.* calculating the phase in degrees for each harmonic contribution h, according to the following formula:

$$\varphi\_deg_{(h)} = atan2\big(s_{(h)}, g_{(h)}\big) \cdot \frac{180}{\pi}$$

*c.3.* calculating the modulation for each harmonic contribution h, according to the following formula:

$$m_{(h)} = \sqrt{\big(s_{(h)}\big)^2 + \big(g_{(h)}\big)^2}$$

*c.4.* calculating the modulation for each harmonic contribution h, normalized by the modulation value for h = 0, according to the following formula:

$$m\_norm_{(h)} = \frac{m_{(h)}}{m_{(h=0)}}$$

**6.** Method according to the preceding claim, **characterized in that** said step *d.* comprises the following sub-steps:

*d.1.* calculating, for each harmonic contribution, the lifetime of the fluorescence signal in the phase, starting from the phase expressed in radians, calculated in said step *c.1.*, according to the following formula:

$$\tau_{\varphi_{(h)}} = \frac{tan\big(\varphi\_rad_{(h)}\big)}{2\pi h f_{ex}};$$

where $f_{ex}$ is the value of the fundamental frequency of the emission source of the fluorescent sample;
d.2. calculating, for each harmonic contribution, the lifetime of the fluorescence signal in the modulation, starting from the normalized modulation for the harmonic contribution for h = 0, calculated in said step c.4., according to the following formula:

$$\tau_{m_{(h)}} = \frac{1}{2\pi h f_{ex}} \sqrt{\left(\frac{1}{m\_norm_{(h)}}\right)^2 - 1}$$

d.3. returning as output the values of the decay times calculated by phase and modulation for each harmonic contribution of the histogram of the fluorescence signal.

7. Method according to the preceding claim, **characterized in that** said step e. comprises the following sub-steps:

e.1. representing, on a number h of Cartesian planes having on the abscissa axis said first phasor *g* and on the ordinate axis said second phasor *s,* the semicircle described by the following equation:

$$\left(g - \frac{1}{2}\right)^2 + s^2 = \left(\frac{1}{2}\right)^2$$

e.2. representing on the h-th Cartesian plane the couples of h-th values of said first phasor *g* and of said second phasor *s;*
e.3. providing in output the values *s, g, m,* $\Phi$, $t_\varphi$, $t_m$ as a function of h for each point F represented on the Cartesian plane and defined by a couple of coordinates (*g, s*).

8. Computer program, comprising coding means such that, when running on a computer, they perform the steps of the method according to any one of claims 1 - 7.

9. System (S) configured to implement the method for the fast calculation of the decay lifetime of a fluorescence signal, according to any one of claims 1-7, which can be coupled to an external acquisition system (S$_A$), of the type comprising a source pulsed laser (L) configured to excite a fluorescent sample (C) so that it can emit a flux of photons (F), said system (S) comprising:

a plurality of data lines (1), connectable to said external acquisition system (S$_A$);
a memory unit (2) capable of storing the input data on said plurality of data lines (1);
a logic control unit (3), operatively connected to said memory unit (2), capable of performing out the steps *a.* - *d.* said method, starting from the data stored in said memory unit (2); and
a display unit (4), operatively connected to said logic control unit (2), capable of receiving the data calculated by said logic control unit (3) and of displaying said first g and second phasor s, calculated in said step e. of said method.

10. System (S) according to the preceding claim, **characterized in that** the computer program of claim 8 is installed in said logic control unit (3).

$Ch_k$
Flag

Boolean

counter_w

$int[0\ ...(n-1)]$

counter_$\varphi$

$int[0\ ...(m-1)]$

$n$

int

$m$

int

$$\varphi_{tot} = \left(counter\_\varphi + \frac{n \cdot counter\_w}{m}\right) MOD\ m$$

$if\ (Ch_k)$

$histogram_{Ch_{(k)}}\ [\varphi_{tot}] + +$

$N_{Ch_k} + +$

$end\ if$

$histogram_{Ch_{(k)}}$
$array[0\ ...(m-1)]$

$N_{Ch_k}$

int

Fig. 1

$$fft_{(h)} = \left( histogram_{Ch_{(k)}} \right)$$

$$s_{(h)} = \frac{imag\left(fft_{(h)}\right)}{N_{Ch_k}}$$

$$g_{(h)} = \frac{real\left(fft_{(h)}\right)}{N_{Ch_k}}$$

$histogram_{Ch_{(k)}}$

$array[0 \ldots (m-1)]$

$N_{Ch_k}$

$int$

$s_{(h)}$

$array[0 \ldots (h-1)]$

$g_{(h)}$

$array[0 \ldots (h-1)]$

Fig. 2

EP 3 896 433 A1

$g_{(h)}$

$array[0 ...(h-1)]$

$m$

$s_{(h)}$

$array[0 ...(h-1)]$

$$\varphi\_rad_{(h)} = atan2\left(s_{(h)}, g_{(h)}\right)$$

$$\varphi\_deg_{(h)} = atan2\left(s_{(h)}, g_{(h)}\right) \cdot \frac{180}{\pi}$$

$$m_{(h)} = \sqrt{\left(s_{(h)}\right)^2 + \left(g_{(h)}\right)^2}$$

$$m\_norm_{(h)} = \frac{m_{(h)}}{m_{(h=0)}}$$

$\varphi\_rad_{(h)}$

$array[0 ...(h-1)]$

$\varphi\_deg_{(h)}$

$array[0 ...(h-1)]$

$m_{(h)}$

$array[0 ...(h-1)]$

$m\_norm_{(h)}$

$array[0 ...(h-1)]$

Fig. 3

$\varphi\_rad_{(h)}$

array$[0 ...(h-1)]$

$m\_norm_{(h)}$

array$[0 ...(h-1)]$

$f_{ex}$

int

for $i = 0:(h\ -1)$

$$\tau_{\varphi_{(i)}} = \frac{tan\big(\varphi\_rad_{(i)}\big)}{2\pi h f_{ex}}$$

$$\tau_{m_{(i)}} = \frac{1}{2\pi h f_{ex}} \sqrt{\left(\frac{1}{m\_norm_{(i)}}\right)^2 - 1}$$

end for

$\tau_{\Phi,h}$

array$[0 ...(h-1)]$

$\tau_{m,h}$

array$[0 ...(h-1)]$

Fig. 4

Fig. 5

bin (m)

Fig. 6

Fig. 7

Europäisches
Patentamt

European
Patent Office

Office européen
des brevets

# EUROPEAN SEARCH REPORT

Application Number

EP 21 16 4169

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RYAN A. COLYER ET AL: "A novel fluorescence lifetime imaging system that optimizes photon efficiency", MICROSCOPY RESEARCH AND TECHNIQUE, vol. 71, no. 3, 1 January 2008 (2008-01-01), pages 201-213, XP055209206, ISSN: 1059-910X, DOI: 10.1002/jemt.20540 * page 201 - page 205 * * page 212 * | 1-10 | INV. G01N21/64 |
| A | US 10 222 335 B2 (STRINGARI CHIARA [US]; GRATTON ENRICO [US] ET AL.) 5 March 2019 (2019-03-05) * abstract * * column 28, line 52 - column 30, line 66 * | 1-10 | |
| A | US 2011/180726 A1 (GRATTON ENRICO [US] ET AL) 28 July 2011 (2011-07-28) * abstract; figures 1-8 * * paragraph [0001] - paragraph [0082] * | 1-10 | |

TECHNICAL FIELDS
SEARCHED (IPC)

G01N

The present search report has been drawn up for all claims

| Place of search | Date of completion of the search | Examiner |
|---|---|---|
| Munich | 18 June 2021 | Pisani, Francesca |

## ANNEX TO THE EUROPEAN SEARCH REPORT
## ON EUROPEAN PATENT APPLICATION NO.

EP 21 16 4169

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2021

| Patent document cited in search report | | Publication date | Patent family member(s) | | Publication date |
|---|---|---|---|---|---|
| US 10222335 | B2 | 05-03-2019 | NONE | | |
| US 2011180726 | A1 | 28-07-2011 | EP | 2529152 A1 | 05-12-2012 |
| | | | JP | 5806240 B2 | 10-11-2015 |
| | | | JP | 5856707 B2 | 10-02-2016 |
| | | | JP | 2013518284 A | 20-05-2013 |
| | | | JP | 2015143719 A | 06-08-2015 |
| | | | KR | 20120126076 A | 20-11-2012 |
| | | | US | 2011180726 A1 | 28-07-2011 |
| | | | WO | 2011093981 A1 | 04-08-2011 |

EPO FORM P0459

For more details about this annex : see Official Journal of the European Patent Office, No. 12/82